# EUROPEAN PATENT SPECIFICATION

(11) **EP 1 416 750 B1**
(45) Date of publication and mention of the grant of the patent: **12.01.2011**
(21) Application number: 02445136.1
(22) Date of filing: 18.10.2002
(51) Int. Cl.: H04W 8/24

(54) **Method and device for downloading settings for applications**
Verfahren und Engerät zum Herunterladen von Anwendungseinstellungen
Métode et dispositive pour le telechargement des configurations des applications

(43) Date of publication of application: 06.05.2004
(73) Proprietor: Sony Ericsson Mobile Communications AB, 221 88 Lund (SE)
(72) Inventor: Karlberg, Johan, 222 37 Lund (SE)
(74) Representative: Aurell, Henrik

(56) References cited:
- EP-A- 1 041 799
- WO-A-00/65855
- DE-A- 19 801 576

## Description

### Field of the invention

The present invention relates to a method for downloading settings for an application into a device e.g. facilitating a request for subscription to a service and downloading the required settings into the device. The invention also relates to such a device. The device is prepared by providing customised application specific menus, which are self-instructing and user friendly. The menus guide a user to select the required keystrokes, the number of which is as low as possible.

### State of the art

There exists today a lot of services that may be exploited with a e.g. mobile telephone. Before the service may be used the correct settings must be introduced into the telephone. One of the strongest barriers for consumers to start using new services is to actually take the first step. Many consumers are discouraged by the fact that they have to do a lot of things on their own before they can start using the service, and of those who actually try to set up their products in order to try a certain service, many never succeed.

There are many ways for consumers to become aware of new services: operators and manufacturers advertising, user manuals, direct mail from the operator, editorial text in various mass media channels, etc. When it comes to subscribing, it is a matter of getting in contact with the operator or service provider, e.g. by phone, by visiting a shop catering for the service provider's offerings, or through the service provider's web page. In many cases, it also involves receiving a confirmation by mail, signing this, and returning it to the service provider.

Today, consumers are best referred to either the web or WAP site of their operator or service provider, or the web site of the manufacturer, to get help with settings they need. At worst, the consumers have to go to the user manuals from the manufacturer or operator for help, or call the customer service of the operator/manufacturer.

Only the most motivated few are prepared to go through the process from scratch. Just looking at all the information in the user manual is discouraging for many.

When it comes to the OTA (Over The Air) services offered from operators, service providers and manufacturers, there are also some problems. First of all, it is a matter of knowing about the possibility of OTA in the first place. Second, you need to know where to go, and third, you need to know the user name and password that your service provider has provided you with. When you try to enter the service provider's site, this immediately becomes an issue, because if you do not have them, you will not get in. When you enter the manufacturer's site, you still need to enter this information before the OTA is sent. Otherwise, you still do not get access to the service.

In many cases, the user names and passwords are sent by mail to the subscribers when they first become subscribers, and it is not far-fetched to assume that many will have forgotten where they keep the documents containing this information. Also, it is not far-fetched to believe that many will keep these documents at home, while they would typically try to set up their services using their computer at work. This is a trivial but powerful barrier.

DE 19801576 relates to a system that downloads data over the air to a mobile device to enhance the usability of added value services.

### Summary of the invention

The present invention solves the above mentioned problems by preparing the portable device, e.g. a mobile telephone, in advance. Menus are built into the device when customising the device for applications existing on the relevant market. In this way, the required information is readily at hand in the device and the user is guided through the menus and need only perform some simple keystrokes.

According to one aspect, the invention provides a method for downloading settings for an application into a device, comprising the steps of:
programming the device in dependence of at least one predetermined application,
such that the device is adapted to display a menu in which a user may navigate, the menu being associated with said application and guiding the user;
actuating the device by means of a keystroke while in said menu causing the device to contact a server and download the settings for the application.

Preferably, the device contacts the server over the air by calling a telephone number loaded into the device and associated with said application, and a session is established with the server, wherein questions and answers are presented in further menus in the device.

In one embodiment, information is exchanged between the device and the server by means of one or more messages in a standardised format. The standardised format is suitably SMS.

Preferably, the device is programmed in dependence of several predetermined applications, some applications originating from different service providers, each having a different server, such that the correct server associated with the respective application is contacted.

The device may be preset to a specific service provider by selecting a service provider from a list in a menu, and/or the device is preset to a specific service provider by inserting a smart card (SIM) containing information about possible service providers and services.

According to another aspect, the invention provides a device capable of downloading settings for an application, wherein:
the device is programmed in dependence of at least one predetermined application,
such that the device is adapted to display a menu in which a user may navigate, the menu being associated with said application and guiding the user;
and wherein the device is adapted to be actuated by means of a keystroke while in said menu causing the device to contact a server and download the settings for the application.

Preferably, the device is adapted to contact the server over the air by calling a telephone number loaded into the device and associated with said application, and the device contains further menus for presenting questions and answers communicated during a session established with the server.

In one embodiment, the device is adapted to exchange information with the server by means of one or more messages in a standardised format. The standardised format is suitably SMS.

Preferably, the device is programmed in dependence of several predetermined applications, some applications originating from different service providers, each having a different server, such that the correct server is associated with the respective application.

The device may contain a list in a menu for selecting a service provider to preset the device to a specific service provider, and/or the device is adapted to receive a smart card (SIM) containing information about possible service providers to preset the device to a specific service provider.

The device may be a portable telephone, a pager, a communicator, a smart phone or an electronic organiser.

### Brief description of the drawing

The invention will be described in detail below with reference to the accompanying drawing in which:

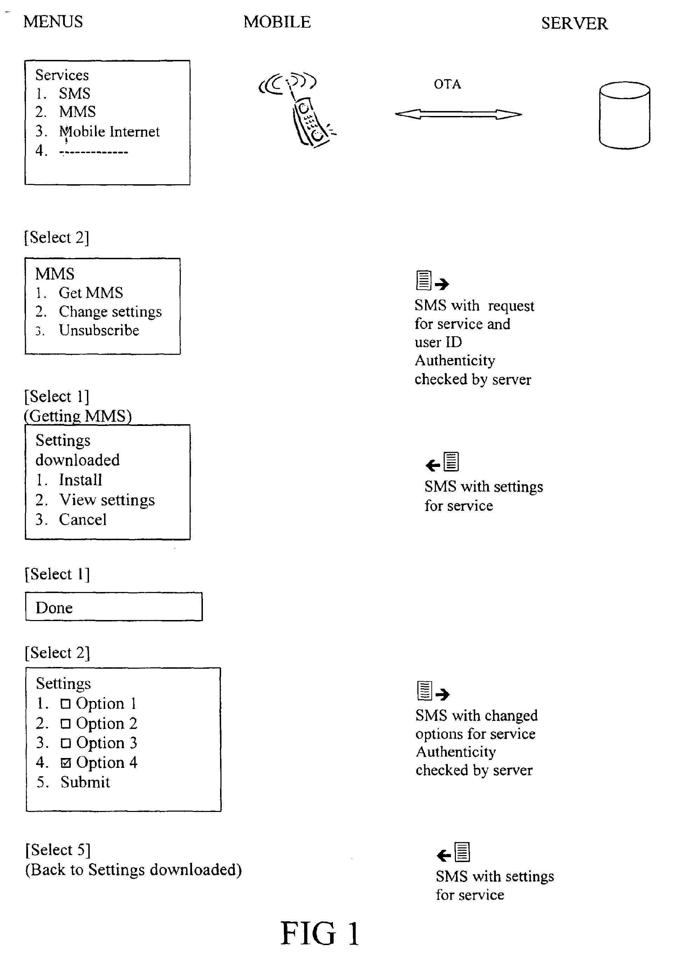

fig. 1 is a diagrammatic illustration of menus and information exchange between the device and the service provider according to the invention.

### Detailed description of preferred embodiments

The invention will be described in connection with mobile telecommunication systems, especially a mobile telephone with which the user wishes to access a service. Other devices that can use the invention include pagers, communicators, smart phones and electronic organisers which may receive applications and settings over the air (OTA).

Today mobile telephones are produced specifically for a certain market with a limited number of operators, or specifically for a specific operator or service provider. The portable device itself is often customised with the operators' trademark and designs and is sometimes sold as a package together with a smart card, a SIM (Subscriber Identity Module) card, containing the mobile telephone number and other information connected to the operator from which the card is purchased.

As is mentioned in the introduction, the operator and/or service provider may provide additional services, or generally contents, which the user may access by means of the telephone. However, before the telephone can be used the settings of the service or contents must be inserted into the device.

The problem is solved according to the present invention by preparing the device already during the manufacturing thereof by programming the device, e.g. by means of JAVA applications, such that the device is tailored to request and handle downloading of settings in connection with the predetermined services. The program can be contained in the software of the device or on a smart card, such as the SIM card or a suitable combination thereof.

The service provider may be selected from a list in a menu, and/or the device is preset to a specific service provider by inserting a smart card (SIM) containing information about possible service providers and services.

In this way the device will contain a function that lets the user, from the phone's menu system, request an application for subscription to the relevant service. This could be from a separate menu in the phone, catering for all relevant services, e.g. a list to choose from. It could also be a specific menu associated with a specific service. E.g., if the user is in the MMS (Multimedia Message Service) menu, he could select a function called something like "Subscribe to the MMS service" or simply "Get MMS".

When the user selects this function, the phone automatically sends a request, suitably as an SMS (Short Message Service) message. However, all means and formats of sending information are within the scope of the invention including for instance gprs (General Packet Radio Service) or other systems supporting transmission of data and/or data packets. The message is sent to the operator or service provider as a request for the service.

The request is received by a server connected to the operator network system. The server collects the requested data, based on the services the user subscribes to and sends an application back to the mobile device. The format of the application can be an SMS or multiple SMS:es, since this is supported by all subscriptions and all terminals from the beginning. It should contain basic information about the service, such as cost, and the options open to the user.

The user selects the appropriate option and with support from the phones security functions, such as personal codes like a PIN, he confirms the subscriptions. The interface for this may be a WAP page that the user is automatically taken to, provided that the WAP service is active in the phone or another menu.

When the subscription is confirmed, the service provider sends an OTA message with the appropriate settings.

The user accepts the settings and is ready to start using the service with one final keystroke.

Fig. 1 illustrates an embodiment of the invention. Menus displayed on the mobile telephone are shown to the left, and messages exchanged between the mobile device and the server over the air (OTA) are shown to the right.

In step one the user is in the services menu containing a number of possible services, such as SMS, MMS and mobile Internet, etc. By selecting the first alternative, e.g. by pressing the key 2, the MMS menu of step 2 is displayed.

We assume that the user wants to install the MMS service. By pressing key 1 the mobile starts performing the required operations. Thus, a connection is established with a server by calling the server's telephone number, which is preloaded in the mobile or the SIM card. A suitable SMS is selected from the phone's memory containing the request for the MMS service and the user identity. The server checks the authenticity of the request. If the request is approved, the server sends back an SMS to the mobile with the required settings for the service.

When this is happening, the mobile display can show the text "Getting MMS" or similar. When this is done, the menu may be as shown in step 3, i.e. "Settings downloaded" together with a number of alternatives. The user may now install the service, view the settings or cancel the procedure.

If "1. Install" is selected, the service is installed in the telephone and the display shows the text "Done" as shown in step 4.

The user may also choose to view the settings by pressing the key 2. In this case the settings are shown with a number of options as shown in step 5. The user may now select or deselect options by pressing the associated number key. When satisfied, the changed settings are submitted by pressing the key 5. A new SMS with changed options for the service is now sent automatically to the server. The server again checks the authenticity and, if OK, sends back an SMS with the new settings for the service.

When the new settings are downloaded the menu will be again as shown in step 3.

The invention gives operators and service providers a new channel to sell subscriptions to services and minimises the effort from both users and operators.

A person skilled in the art will realise that it is possible to vary the appearance of the menus, the keys used to select operations, and the form of messages sent between the mobile and the service without departing from the scope of the invention. The invention is only limited by the claims below.

## Claims

1. A method for downloading settings for an application into a device capable of displaying a menu in which a user may navigate, **characterised by** the steps of:
preparing the device during the manufacturing thereof by building a menu into the device in dependence of and preparation for at least one predetermined application to be downloaded, the menu being tailored to handle downloading of settings in connection with said application and guiding the user;
actuating the device by means of a keystroke while in said menu causing the device to contact a server and download the settings for the application.

2. A method according to claim 1, **characterised in that** the device contacts the server over the air by calling a telephone number loaded into the device and associated with said application.

3. A method according to claim 1 or 2, **characterised in that** a session is established with the server, wherein questions and answers are presented in further menus in the device.

4. A method according to claim 1, 2 or 3, **characterised in that** information is exchanged between the device and the server by means of one or more messages in a standardised format.

5. A method according to claim 4, **characterised in that** the standardised format is SMS.

6. A method according to any one of the preceding claims, **characterised in that** the device is programmed in dependence of several predetermined applications, some applications originating from different service providers, each having a different server, such that the correct server associated with the respective application is contacted.

7. A method according to claim 5, **characterised in that** the device is preset to a specific service provider by selecting a service provider from a list in a menu.

8. A method according to claim 5, **characterised in that** the device is preset to a specific service provider by inserting a smart card (SIM) containing information about possible service providers and services.

9. A device capable of downloading settings for an application and of displaying a menu in which a user may navigate, **characterised in that:**
the device is prepared during the manufacturing thereof by being programmed with a menu built into the device in dependence of and preparation for at least one predetermined application to be downloaded, the menu being tailored to handle downloading of settings in connection with said application and guiding the user;
wherein the device is adapted to be actuated by means of a keystroke while in said menu causing the device to contact a server and download the settings for the application.

10. A device according to claim 9, **characterised in that** the device is adapted to contact the server over the air by calling a telephone number loaded into the device and associated with said application.

11. A device according to claim 9 or 10, **characterised in that** the device contain further menus for presenting questions and answers communicated during a session established with the server.

12. A device according to claim 9, 10 or 11, **characterised in that** the device is adapted to exchange information with the server by means of one or more messages in a standardised format.

13. A device according to claim 12, **characterised in that** the standardised format is SMS.

14. A device according to any one of claims 9 to 13, **characterised in that** the device is programmed in dependence of several predetermined applications, some applications originating from different service providers, each having a different server, such that the correct server is associated with the respective application.

15. A device according to claim 14, **characterised in that** the device contains a list in a menu for selecting a service provider to preset the device to a specific service provider.

16. A device according to claim 14, **characterised in that** the device is adapted to receive a smart card (SIM) containing information about possible service providers to preset the device to a specific service provider.

17. A device according to any one of claims 9 to 16, **characterised in that** the device is a portable telephone, a pager, a communicator, a smart phone or an electronic organiser.

## Patentansprüche

1. Verfahren zum Herunterladen von Einstellungen für eine Anwendung in eine Vorrichtung, die betreibbar ist, ein Menü anzuzeigen, in dem ein Nutzer navigieren kann, **gekennzeichnet durch** die Schritte zum:
Ausrüsten der Vorrichtung während dessen Herstellung durch Bereitstellen eines Menüs in der Vorrichtung in Abhängigkeit und zur Ausrüstung mit zumindest einer vorbestimmten herunterzuladenen Anwendung, wobei das Menü ausgelegt ist, das Herunterladen von Einstellungen in Verbindung mit der Anwendung zu bedienen und den Nutzer zu führen;
Betreiben der Vorrichtung mittels eines Tastendrucks in dem Menü, was bewirkt, dass die Vorrichtung einen Server kontaktiert und die Einstellungen für die Anwendung herunterlädt.

2. Verfahren nach Anspruch 1, **dadurch gekennzeichnet, dass** die Vorrichtung den Server über die Luftschnittstelle durch Wählen einer Telefonnummer kontaktiert, die in der Vorrichtung gespeichert ist und die mit der Anwendung verbunden ist.

3. Verfahren nach Anspruch 1 oder 2, **dadurch gekennzeichnet, dass** eine Sitzung mit dem Server eingerichtet wird, wobei Fragen und Antworten in weiteren Menüs in der Vorrichtung dargestellt werden.

4. Verfahren nach Anspruch 1, 2 oder 3, **dadurch gekennzeichnet, dass** eine Information zwischen der Vorrichtung und dem Server mittels einer oder mehrerer Nachrichten in einem standardisierten Format ausgetauscht wird.

5. Verfahren nach Anspruch 4, **dadurch gekennzeichnet, dass** das standardisierte Format eine SMS ist.

6. Verfahren nach irgendeinem der vorhergehenden Ansprüche, **dadurch gekennzeichnet, dass** die Vorrichtung in Abhängigkeit von mehreren vorbestimmten Anwendungen programmiert ist, wobei einige Anwendungen ihren Ursprung in verschiedenen Serviceprovidern haben, die jeder einen unterschiedlichen Server aufweisen, so dass der korrekte Server, der mit der jeweiligen Anwendung assoziiert ist, kontaktiert wird.

7. Verfahren nach Anspruch 5, **dadurch gekennzeichnet, dass** die Vorrichtung auf einen bestimmten Serviceprovider voreingestellt ist, durch Auswählen eines Serviceproviders von einer Liste in einem Menü.

8. Verfahren nach Anspruch 5, **dadurch gekennzeichnet, dass** die Vorrichtung auf einen bestimmten Serviceprovider voreingestellt ist, durch Einführen einer Chipkarte (SIM) mit Informationen über mögliche Serviceprovider und Services.

9. Vorrichtung, betreibbar zum Herunterladen von Einstellungen für eine Anwendung und zum Anzeigen eines Menüs, in dem ein Nutzer navigieren kann, **dadurch gekennzeichnet, dass**:
die Vorrichtung während dessen Herstellung durch eine Programmierung mit einem Menü ausgerüstet wird, das in der Vorrichtung bereitgestellt wird, in Abhängigkeit und zur Ausrüstung mit zumindest einer vorbestimmten herunterzuladenen Anwendung, wobei das Menü ausgelegt ist, das Herunterladen von Einstellungen in Verbindung mit der Anwendung zu bedienen und den Nutzer zu führen;
wobei die Vorrichtung ausgelegt ist, mittels eines Tastendrucks in dem Menü betrieben zu werden, der bewirkt, dass die Vorrichtung einen Server kontaktiert und die Einstellungen für die Anwendung herunterlädt.

10. Vorrichtung nach Anspruch 9, **dadurch gekennzeichnet, dass** die Vorrichtung ausgelegt ist, den Server über die Luftschnittstelle zu kontaktieren, durch Wählen einer Telefonnummer, die in der Vorrichtung gespeichert ist und die mit der Anwendung zusammenhängt.

11. Vorrichtung nach Anspruch 9 oder 10, **dadurch gekennzeichnet, dass** die Vorrichtung weitere Menüs enthält zum Darstellen von Fragen und Antworten, die während einer mit dem Server eingerichteten Sitzung kommuniziert werden.

12. Vorrichtung nach Anspruch 9, 10 oder 11, **dadurch gekennzeichnet, dass** die Vorrichtung ausgelegt ist, eine Information mit dem Server auszutauschen, mittels einer oder mehrerer Nachrichten in einem standardisierten Format.

13. Vorrichtung nach Anspruch 12, **dadurch gekennzeichnet, dass** das standardisierte Format eine SMS ist.

14. Vorrichtung nach irgendeinem der Ansprüche 9 bis 13, **dadurch gekennzeichnet, dass** die Vorrichtung in Abhängigkeit von mehreren vorbestimmten Anwendungen programmiert ist, wobei einige Anwendungen ihren Ursprung in verschiedenen Serviceprovidern haben, die jeder einen unterschiedlichen Server aufweisen, so dass der korrekte Server mit der jeweiligen Anwendung assoziiert wird.

15. Vorrichtung nach Anspruch 14, **dadurch gekennzeichnet, dass** die Vorrichtung eine Liste in einem Menü enthält zum Auswählen eines Serviceproviders, um die Vorrichtung auf einen bestimmten Serviceprovider voreinzustellen.

16. Vorrichtung nach Anspruch 14, **dadurch gekennzeichnet, dass** die Vorrichtung ausgelegt ist für den Empfang einer Chipkarte (SIM) mit Informationen über mögliche Serviceprovider, um die Vorrichtung auf einen bestimmten Serviceprovider voreinzustellen.

17. Vorrichtung nach irgendeinem der Ansprüche 9 bis 16, **dadurch gekennzeichnet, dass** die Vorrichtung ein tragbares Telefon, ein Pager, ein Kommunikator, ein Smartphone oder ein elektronischer Organisator ist.

## Revendications

1. Procédé destiné à télécharger des paramètres d'une application sur un dispositif en mesure d'afficher un menu dans lequel l'utilisateur peut se déplacer, **caractérisé par** les étapes consistant à :
préparer le dispositif, pendant sa fabrication, en construisant un menu dans le dispositif en fonction et en préparation d'au moins une application prédéterminée à télécharger, le menu étant fait sur mesure pour traiter le téléchargement de paramètres en liaison avec ladite application et le guidage de l'utilisateur ;
actionner le dispositif à l'aide d'une touche alors que l'utilisateur est dans ledit menu, ce qui commande au dispositif d'entrer en contact avec un serveur et de télécharger les paramétrages pour l'application.

2. Procédé selon la revendication 1, **caractérisé en ce que** le dispositif entre en contact avec le serveur par radio, en appelant un numéro de téléphone chargé sur le dispositif et associé à ladite application.

3. Procédé selon la revendication 1 ou 2, **caractérisé en ce qu'**une session est ouverte avec le serveur, au cours de laquelle des questions et réponses sont présentés dans d'autres menus sur le dispositif.

4. Procédé selon la revendication 1, 2 ou 3, **caractérisé en ce que** des informations sont échangées entre le dispositif et le serveur à l'aide d'un ou plusieurs messages dans un format normalisé.

5. Procédé selon la revendication 4, **caractérisé en ce que** le format normalisé est le SMS.

6. Procédé selon l'une quelconque des revendications précédentes, **caractérisé en ce que** le dispositif est programmé en fonction de plusieurs applications prédéterminées, certaines applications provenant de différents fournisseurs de services, chacun possédant un serveur différent, si bien que le contact est établi avec le serveur correct, associé avec l'application respective.

7. Procédé selon la revendication 5, **caractérisé en ce que** le dispositif est pré-paramétré pour un fournisseur de service spécifique en sélectionnant un fournisseur de service dans une liste d'un menu.

8. Procédé selon la revendication 5, **caractérisé en ce que** le dispositif est pré-paramétré pour un fournisseur de service spécifique en insérant une carte à puce (SIM) contenant des informations sur les fournisseurs de service et les services possibles.

9. Dispositif en mesure de télécharger des paramètres pour une application et d'afficher un menu dans lequel un utilisateur peut se déplacer, **caractérisé en ce que** :
le dispositif est préparé, pendant sa fabrication, en le programmant avec un menu intégré dans le dispositif, en fonction et en préparation d'au moins une application prédéterminée à télécharger, le menu étant fait sur mesure pour traiter le téléchargement de paramètres en liaison avec ladite application et le guidage de l'utilisateur ;
dans lequel le dispositif est conçu pour être actionné à l'aide d'une touche alors que l'utilisateur est dans ledit menu, ce qui commande au dispositif d'entrer en contact avec un serveur et de télécharger les paramétrages pour l'application.

10. Dispositif selon la revendication 9, **caractérisé en ce que** le dispositif entre en contact avec le serveur par radio, en appelant un numéro de téléphone chargé sur le dispositif et associé à ladite application.

11. Dispositif selon la revendication 9 ou 10, **caractérisé en ce que** le dispositif contient d'autres menus destinés à présenter des questions et réponses communiquées pendant une session ouverte avec le serveur.

12. Dispositif selon la revendication 9, 10 ou 11, **caractérisé en ce que** des informations sont échangées avec le serveur à l'aide d'un ou plusieurs messages dans un format normalisé.

13. Dispositif selon la revendication 12, **caractérisé en ce que** le format normalisé est le SMS.

14. Dispositif selon l'une quelconque des revendications 9 à 13, **caractérisé en ce que** le dispositif est programmé en fonction de plusieurs applications prédéterminées, certaines applications provenant de différents fournisseurs de services, chacun possédant un serveur différent, si bien que le serveur correct est associé avec l'application respective.

15. Dispositif selon la revendication 14, **caractérisé en ce que** le dispositif contient une liste dans un menu, afin de sélectionner un fournisseur de service afin de pré-paramétrer le dispositif sur un fournisseur de service spécifique.

16. Dispositif selon la revendication 14, **caractérisé en ce que** le dispositif est conçu pour recevoir une carte à puce (SIM) contenant des informations sur des fournisseurs de service possibles afin de pré-paramétrer le dispositif pour un fournisseur de service spécifique.

17. Dispositif selon l'une quelconque des revendications 9 à 16, **caractérisé en ce que** le dispositif est un téléphone portable, un boîtier de recherche de personnes, un communicateur, un téléphone intelligent ou un organisateur électronique.
